# EUROPEAN PATENT SPECIFICATION

(11) **EP 2 760 750 B1**
(45) Date of publication and mention of the grant of the patent: **26.08.2015**
(21) Application number: 11794250.8
(22) Date of filing: 29.09.2011
(51) Int. Cl.: B65D 77/20, A23L 1/29, B65B 31/00, B65B 47/02, B65D 21/02, B65D 1/28

(54) **UNIT DOSE PACKAGE FOR NUTRITIONAL PRODUCT**
EINZELPORTIONSPACKUNG FÜR EIN ERNÄHRUNGSPRODUKT
CONDITIONNEMENT UNITAIRE POUR PRODUIT NUTRITIONNEL

(43) Date of publication of application: 06.08.2014
(73) Proprietor: N.V. Nutricia, 2712 HM Zoetermeer (NL)
(72) Inventor: Habraken, Else, NL-2518 RV Den Haag (NL); Piette, Benoît Marie François, FR-19100 Brive (FR); Willemen, Antonius Maurits, NL-3524 KN Utrecht (NL)
(74) Representative: Nederlandsch Octrooibureau
(86) International application number: PCT/NL2011/050658
(87) International publication number: WO 2013/048237

(56) References cited:
- EP-A2- 0 204 324
- FR-A1- 2 256 874
- US-A- 5 800 887

## Description

### BACKGROUND OF THE INVENTION

### 1. Field of the Invention

The present invention relates to recipients for storage and consumption of liquid nutrition and more particularly to recipients for individual single-shot doses of nutritional products having particular sensitivity to their storage conditions. The invention further relates to a packaged nutritional product having a high fat content and to a method of administration of such products.

### 2. Description of the Related Art

Nutritional products and nutriceuticals have become steadily more complex and are subject to ever more stringent packaging requirements. This, in order to ensure that the desirable properties of the product are maintained and that the user/patient receives the full benefit according to their expectations and are not subjected to any undesirable side-effects due to incorrect storage.

A growing area of nutrition is that of geriatrics. Aged people, often in the last years of their life can have improved life-expectation and quality of life if their nutrition is carefully balanced to their needs, in particular, providing adequate energy without overburdening their often sensitive digestive systems. These persons however are often difficult to address, since they may be forgetful, resistant to change and physically or mentally impaired. Other categories of malnourished or undernourished persons exist that may benefit of improved nutrition.

One product that is presently used is a high-fat nutritional drink available from the applicant under the name Calogen ExtraTM. This product is presently sold in individual bottles having volumes of 200 ml or more. A unit dose is around 30 ml and recommended usage is four times daily. One bottle thus provides around six doses of the feed. Once opened, the product may be kept in the fridge for up to 48 hours. A problem with such packaging is that the user may open a new container without remembering that a previous container is unfinished. This can lead to a collection of half-used packages in the fridge without any overview of which may still be usable and which not. An additional disadvantage of the existing bottles is the need to dose the contents from a bottle into a measuring beaker or cup, requiring an additional action of washing the cup. Calogen ExtraTM is rather sticky and particularly difficult to clean. In hospitals more users may share a single bottle requiring additional medicine cups.

The existing bottles described above are formed with a wall of a laminate of ethylene vinyl alcohol (EVOH) sandwiched between layers of high density polyethylene (HDPE). Additional layers of graphite may be provided in order to prevent light degradation of the product during storage. The bottles must be designed for storage of up to 12 months which imposes severe limitations on the oxygen permeability of the wall. The smaller the recipient, the more restrictive is the permeability limitation since the ratio of volume to wall surface area decreases. There has thus been a preference in the past towards larger, multidose bottles. Attempts to reduce the size of the bottle to a single dose have come up against the problem of wall permeability. It has also been noted that some users do not appreciate drinking from a bottle, either out of principle or because it requires them to tip their head backwards, which for some patients may be uncomfortable.

Cup shaped containers are also known formed from resin laminates comprising an EVOH layer. One such container is described in EP204324 in which a resin laminate sheet is pressure thermoformed into a cup. In order to achieve the desired thermo forming characteristics, the EVOH used had a molar ethylene content of 38%. The cup showed an oxygen permeability of 0.03 cc per day or around 10 cc per year. For sensitive alimentary products, this permeability is more than ten times higher than may be acceptable. An oxygen-absorbing container is disclosed in US5,800,887. This disclosure, which may be considered to represent the most relevant state of the art, discloses a cup-like container having a content of 180 ml manufactured by vacuum moulding a seven-layer sheet. The multi-layer plastic sheet comprises an oxygen absorbing layer and a gas barrier layer which is located on an outer side of the oxygen absorbing layer.

It would therefore be desirable to offer an alternative recipient to those which are presently available which would at least partially overcome some of the above-mentioned disadvantages

### BRIEF SUMMARY OF THE INVENTION

According to the present invention, there is provided a unit dose package of a liquid nutritional product comprising a form-stable, cup shaped container with a capacity of less than 70 ml having a rim, a frustoconical sidewall and a base, a quantity of the nutritional product within the container and a foil closure sealed to the rim, whereby the container is formed of a laminate comprising a barrier layer of highly orientable EVOH having an ethylene content of less than 31 mol %, preferably around 27 mol %, and an oxygen transmission of less than 0.0068 ml/ml/year, preferably below 0.0035 ml/ml/year, between an inner carrier layer and an outer carrier layer. The container should have a minimum volume of 30 ml and is preferably around 40 ml in volume.

It has been found that by changing the shape of the package from bottle form to cup form, an improvement in terms of the volume/surface area ratio is achieved. Furthermore, by using a highly orientable EVOH layer, good barrier properties are achievable while maintaining the ability to thermoform the laminate into a cup form. In the present context, highly orientable is understood to mean that the material may be extended to an area ratio of at least ten times without losing its integrity as an oxygen barrier material. This makes it possible to achieve a container having an overall oxygen permeability per ml of content which can maintain an oxygen content of the package at less than 0.0114 ml/ml (cc oxygen/cc of food) for at least 12 months. Preferably, the oxygen permeability of the whole package in its sealed state is less than 0.48 ml/year. All measurements are performed using an Ox-Tran 2/20 and 2/21 MH and SH Modules (3) oxygen measuring device according to SQM-TS-030_E based on ASTM Standards D-3985-95; F1307-02 and F1927-98.

Additionally, use of a cup shaped container is more convenient than a bottle in an automated packaging environment as prior to filling they may stacked inside one another.

According to a preferred embodiment, the carrier layers comprise polypropylene (PP). The skilled person will be well aware of alternative materials such as PS that may be used to provide this function which must be compatible with foodstuffs and provide adequate support for the processing of the EVOH barrier layer. Nevertheless, PP has been found most suitable and may be present both in virgin form and as a regrind.

According to one aspect of the invention, an opaque layer is provided within one or both of the carrier layers. This layer preferably comprises graphite. This is preferably mixed into the PP or other material of the carrier layers or may form one or more intermediate layers between the barrier layer and the respective inner and outer carrier layers. The graphite is black and the inner and outer carrier layers may be provided with a pigment in order to mask this. Desirably the inner and outer carrier layers are coloured white and may be formed of virgin PP. The intermediate opaque layer or layers may use reground PP.

According to a further aspect of the invention, the inner layer and the outer layer may be of different thicknesses. Achieving the desired oxygen permeability and opacity with a wall thickness that can be easily manufactured by thermoforming processes is a considerable challenge. By adjusting the relative position of the barrier layer within the laminate, marginal improvements may be achieved. In a preferred embodiment, the inner layer may be relatively thicker than the outer layer. In particular, the inner layer may be up to 25% thicker than the outer layer. The permeability of EVOH is very sensitive to moisture. Under higher relative humidity, the permeability strongly increases, which may lead to a decrease in the shelf life of the product. The relative humidity on the inside of the container wall is always higher than the relative humidity on the outside of the wall. By having the barrier layer closer to the outside surface than to the inside surface, decreased oxygen transmission may be achieved.

Preferably, the laminate has a thickness of between 0.5 mm and 1.7 mm before forming into a cup shape. This provides the necessary stability required for the container while avoiding excessive production costs. A thickness of around 1.2 mm has been found most adequate. During thermoforming of the container, the sidewalls may be subjected to a linear draw ratio of at least 2.0 and this may even be more than 2.4. This leads to a corresponding reduction in thickness of the sidewalls compared to other areas of the container such as the rim. Preferably the ratio between the thickness of the rim and the thinnest region of the sidewall is at least 2, more usually around 3 and even as much as 4 times. Because of the highly orientable nature of the EVOH barrier layer, such extension may be achieved without prejudice to the barrier property. In fact it has even been observed that in certain cases the oxygen barrier property may be improved.

In its finished state, the package desirably has a head space of at most 15 ml, more preferably, less than 20% of the container volume. For a 40 ml cup the head space will preferably be less than 10 ml. The head space is defined by the difference between the volume of the product and the volume of the container i.e. it is the free volume between the surface of the product and the foil closure. It will be understood that although low head space may be desirable for conservation purposes, on opening it may increase spillages. For this reason, it is still more preferable that the head space above the product is oxygen depleted. This may be achieved by flushing the space with an inert gas such as nitrogen prior to sealing the package.

In one preferred embodiment, the barrier layer has a thickness of around 50 micron prior to thermo forming. After thermo forming this layer will preferably have an average thickness of between 15 microns and 40 microns at least in the area of the sidewall of the container. EVOH is relatively ductile compared to PP and other materials suitable for forming the carrier layer. This makes it difficult to keep its shape during thermo forming and difficult to cut out the formed and cooled cups. Using a thicker layer of EVOH to achieve improved barrier properties would not therefore be a viable option.. Preferably, the barrier layer and the PP layers are joined by a film of food quality adhesive

The package is preferably formed to have a frustoconical sidewall having an angle to the vertical of between 4° and 14°, preferably around 10°. It has also been found that a desirable form of the container has a hexagonal lower region. This improves gripping and orientation of the container, in particular on removal of the foil closure. The base may be hexagonal and the adjacent part of the sidewall may transition to a round cross-section close to the rim. In that case, the above mentioned angle of the frustoconical sidewall may refer to the limits between an area of greatest slope and an area of least slope around the circumference.

Most preferably, the rim is a substantially circular annulus having a generally flat upper surface and a smooth outer edge for drinking. A width of the rim of around 3mm has been found adequate in this respect. It is however not excluded that the rim may be other than circular or may have a designated area from which a user should drink.

If desired, one or more indexing grooves may be provided in the sidewall adjacent the rim. These indexing grooves can assist in unstacking of the containers during an automated filling process by preventing stacked empty containers from becoming completely nested and sticking together.

According to another aspect of the invention, the foil closure comprises aluminium. Preferably this may be in the form of an aluminium PP laminate which can be readily heat sealed to the PP material of the rim. Aluminium is generally considered highly suitable for such purposes as it has an oxygen permeability of less than the laminate of the container. Preferably, the foil closure comprises a tab to assist its removal from the rim. The tab may be extra large to assist gripping by a patient having reduced gripping ability. Preferably the tab is at least 15 mm in length, preferably also at least 15 mm in width. Although the package may be suitable for various nutritional products, it is most preferably filled with a high-fat, high energy drink.

The invention also relates to a method of packaging a unit dose of a liquid nutritional product, the method comprising providing a cup shaped container with a capacity of less than 70 ml having a rim, a frustoconical sidewall and a base, wherein the container has an oxygen permeability of less than 0.0068 ml/ml/year. For a 70 ml container, the value should be less than 0.48 ml/year. For a 40 ml container, the value should be less then 0,14 ml/year. The method comprises filling a quantity of the nutritional product into the container, flushing a head space above the product with an inert gas to remove oxygen and sealing the container by applying a foil closure to the rim and sealing the rim and the closure together.

Most preferably the step of flushing may be carried out a number of times, by which the oxygen content may be reduced to below 5%, preferably below 4%. The method may employ a container and laminate as described above. In particular, the step of providing a container may comprise thermo forming a container from a laminate sheet whereby during thermoforming a linear draw ratio of at least 2 is applied at least to the side walls.

### BRIEF DESCRIPTION OF THE DRAWINGS

The features and advantages of the invention will be appreciated upon reference to the following drawings of a number of exemplary embodiments, in which:
Fig. 1 is a perspective view of a package according to the invention;
Fig. 2 is a similar view to Fig. 1 without the closure;
Fig. 3 is view of the container of Fig . 2 from below;
Fig. 4 is a partial section through the container of Fig. 3 along line IV-IV;
Fig. 5 is a partial cross-section through a portion of laminate sheet used for forming the container of Fig. 4; and
Fig. 6 is a graph of the oxygen ingress to various containers.

### DESCRIPTION OF ILLUSTRATIVE EMBODIMENTS

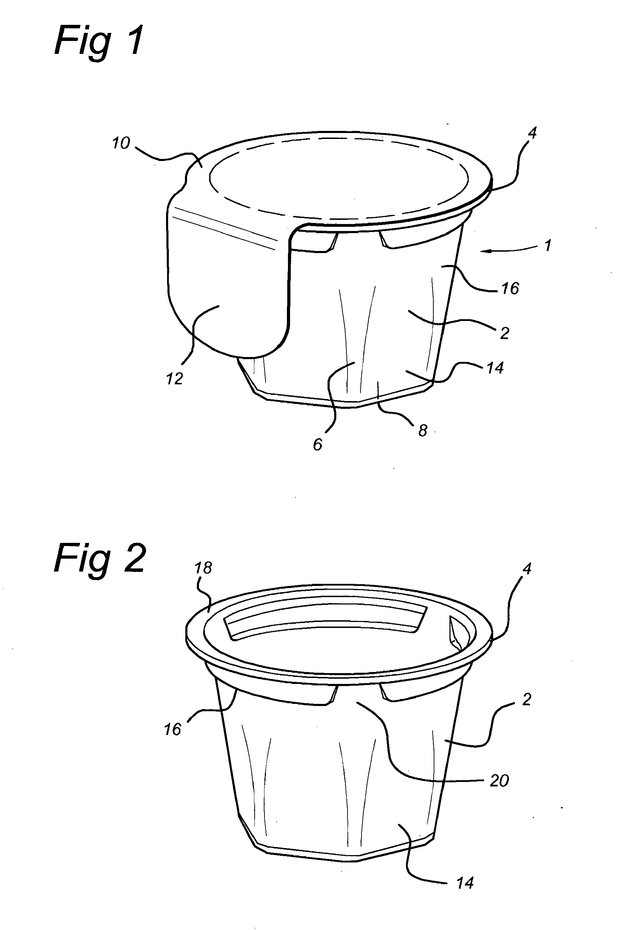

According to Fig. 1 there is shown a package 1 for a nutritional product. The package 1 comprises a container 2 having a rim 4, a sidewall 6 and a base 8. The package 1 is closed by a foil closure 10 having a tab 12 to assist removal.

As can be seen from Fig. 1, a lower region 14 of the sidewall 6 is hexagonal in shape. This transitions to a round cross section at an upper region 16 adjacent to the rim 4. This is better seen in Fig. 2 which shows the container 2 with the foil closure 10 removed. The rim 4 has an annular upper surface 18. Indexing grooves 20 are provided in the sidewall 6 adjacent the rim.

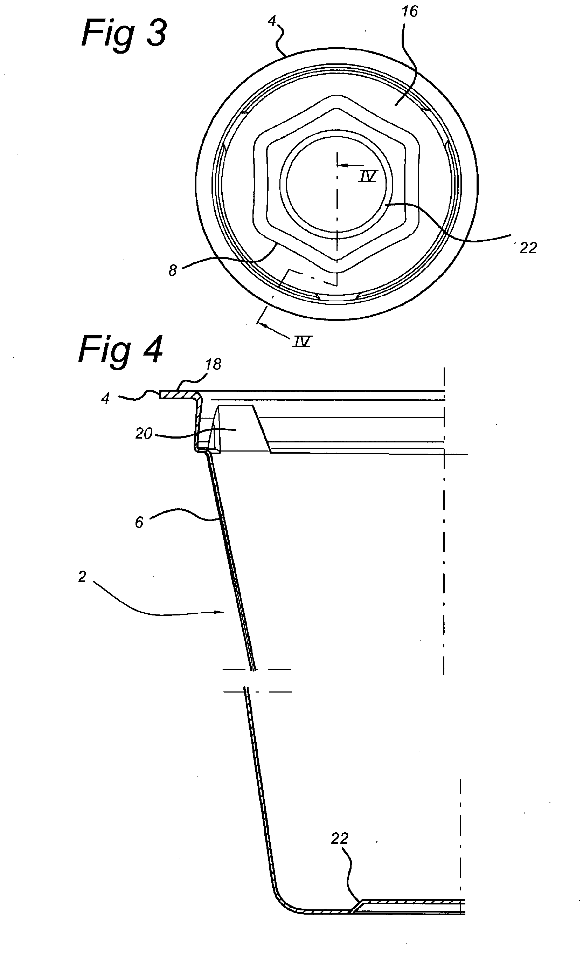

Fig. 3 shows a view of the container 2 of Fig. 2 from below, showing the hexagonal shape of the base 8 and the circular form of the rim 4 and upper region 16. A recess 22 is formed in the base to improve standing stability.

Fig. 4 shows a partial section taken through the container 2 along sections A-A and B-B of Fig. 3. The sidewall 6 is angled with respect to a container axis X by an angle α which varies from 8° at B-B to around 12° at A-A. According to Fig. 4, it may be appreciated how index grooves 20 may serve to space the container 2 from another similar container in the case that such containers are nested together in a stacked configuration.

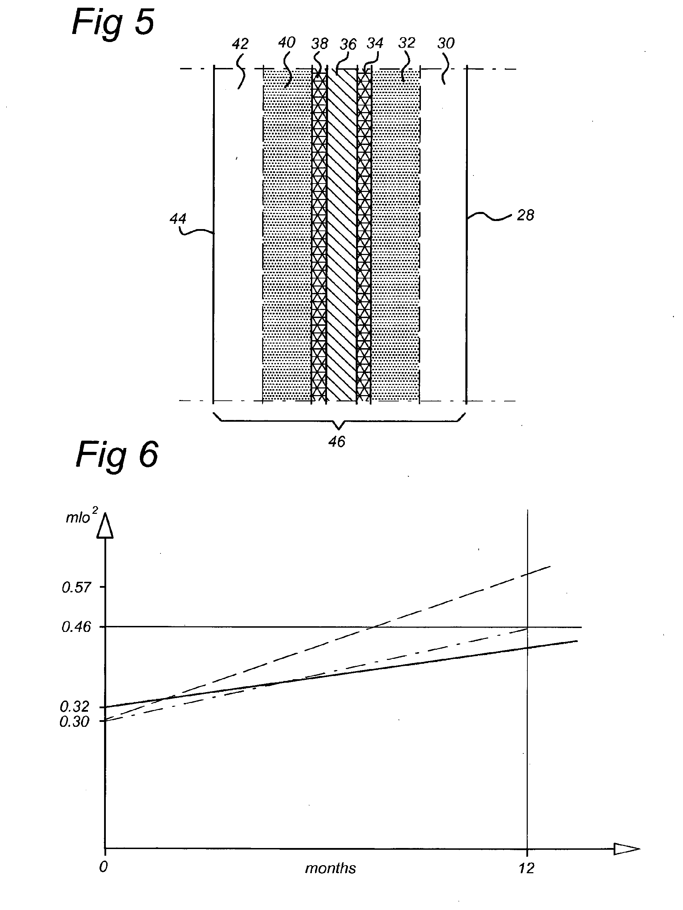

Fig. 5 is a detail cross section through a portion of a laminate sheet used for thermoforming the container 2 according to the invention. Fig. 5 depicts the layers present between an inner surface 28 and an outer surface 44. These are accordingly: an inner carrier layer 30 of virgin white PP; an inner opaque layer 32 of regrind PP containing graphite powder; an inner adhesive layer 34 of food grade adhesive; a barrier layer 36 of EVOH; an outer adhesive layer 38 of food grade adhesive; an outer opaque layer 40 of regrind PP containing graphite powder; and an outer carrier layer 42 of virgin white PP. The layers form a laminate sheet 46 having a total thickness of about 1.6 mm. According to the depicted embodiment, the outer carrier layer has a thickness of 206 microns, the outer opaque layer 40 has a thickness of 411 microns, the outer adhesive layer 38 has a thickness of 55 microns, the EVOH barrier layer has a thickness of 50 microns, inner adhesive layer 34 has a thickness of 55 microns, inner opaque layer 32 has a thickness of 411 microns and inner carrier layer has a thickness of 389 microns. In this example, the EVOH layer comprised SP 521B available from EVAL Europe NV. This material has a limit of orientatability in area of more than 10, meaning that it can be extruded or stretched to an area of more than 10 times the original area without a decrease in oxygen permeability. The asymmetric position of the EVOH layer with respect to the carrier layers has been found to improve oxygen barrier properties when used in this manner to store liquid products.

Alternatively, the outer carrier layer could be reduced to 350 microns and the inner carrier layer increased to 750 microns The ratio of the inner layer to the outer layer may thus vary from 1:1 to 1.75:1 and may even be as high as 2.5:1.

The opaque layers 32, 40 provide protection of the contents of the container 2 from light, in particular, they prevent the penetration of UV light which can seriously degrade high-fat content nutritional products. In particular, it may be desirable to limit exposure to wavelengths in the 100-400 nanometer range.

Fig. 6 is a graph showing the oxygen ingress to a number of different containers in the context of the invention. The abscissa plots the time in months while the ordinate indicates the total oxygen volume per 40 ml dose of product. The dashed line represents a conventional bottle as used for Calogen Extra^{™}. It begins at a value of 0.14 representing the volume of oxygen present in the head space on initial sealing of the container. Thereafter, the line rises at a gradient of 0.16 ml per year to a value of around 0.46 after 12 months storage. The dotted line represents a hypothetical bottle of similar form to the conventional bottle but having a volume of a single dose of 40 ml. The head space is smaller in proportion and the dotted line departs from the same point. Nevertheless, the container has a surface area/volume ratio that is 1.7 x higher than the larger container and thus oxygen ingress per unit volume is proportionally higher. After 12 months the total oxygen within the unit dose container would be 0.57 ml, which is above the accepted norm of 0.46.

The line x--x- represents the oxygen uptake of a container of 40 ml according to the present invention having a head space volume of 8 ml flushed to an oxygen content of 4%. The initial oxygen content is thus 0.32 ml. Oxygen ingress takes place through the sidewall 6 at a rate of 0.136 ml/year leading to a total oxygen content of 0.456 after 12 months.

Thus, the invention has been described by reference to certain embodiments discussed above. It will be recognized that these embodiments are susceptible to various modifications and alternative forms well known to those of skill in the art. In particular, the exact shape of the container may be distinct from the schematically illustrated design.

## Claims

1. A unit dose package (1) of a liquid nutritional product comprising:
a form-stable cup shaped container (2) having a rim (4), a frustoconical sidewall (6) and a base (8), the container having a capacity of less than 70 ml and an oxygen transmission of less than 0.0068 ml/ml/year;
a quantity of the nutritional product within the container; and
a foil closure (10) sealed to the rim;
wherein the container is formed of a laminate comprising an oxygen barrier layer (36) of highly orientable EVOH having an ethylene content of below 31 mol % between an inner carrier layer (30) and an outer carrier layer (42).

2. The package of claim 1, wherein the laminate further comprises an opaque layer (32, 40), preferably comprising graphite.

3. The package of claim 1 or claim 2, wherein the inner carrier layer is thicker than the outer carrier layer.

4. The package of any preceding claim wherein the laminate has a thickness prior to forming of between 0.5 mm and 1.7 mm, preferably around 1.6 mm.

5. The package of any preceding claim, wherein the carrier layers comprise polypropylene (PP).

6. The package of any preceding claim, wherein a head space defined by the difference between the volume of the product and the volume of the container is at most 15 ml.

7. The package of any preceding claim, wherein a head space above the product is oxygen depleted.

8. The package of any preceding claim, wherein the oxygen barrier layer has an average thickness of between 15 microns and 40 microns, at least in the area of the sidewall.

9. The package of any preceding claim, wherein the barrier layer comprises EVOH having a limit of orientatability in area of at least 10.

10. The package of any preceding claim, wherein the rim is a substantially circular annulus having a generally flat upper surface and a smooth outer edge for drinking.

11. The package of any preceding claim, wherein the container is thermoformed from a laminate sheet at a draw ratio of at least 2.

12. The package of any preceding claim, wherein the foil closure comprises aluminium and has an oxygen permeability of less than the laminate.

13. The package of any preceding claim wherein the nutritional product is a high-fat, high-energy drink.

14. A method of packaging a unit dose of a liquid nutritional product, the method comprising:
providing a cup shaped container (2) with a capacity of less than 70 ml having a rim (4), a frustoconical sidewall (6) and a base (8), wherein the container has an oxygen permeability of less than 0.0068 ml/ml/year;
the container being formed of a laminate comprising an oxygen barrier layer (36) of highly orientable EVOH having an ethylene content of below 31 mol % between an inner carrier layer (30) and an outer carrier layer (42);
filling a quantity of the nutritional product into the container;
flushing a head space above the product with an inert gas to remove oxygen; and
sealing the container by applying a foil closure (10) to the rim and sealing the rim and the closure together.

15. The method according to claim 14, comprising thermoforming the container from a laminate sheet at a draw ratio of at least 2.

## Patentansprüche

1. Einheitsdosierungspackung (1) eines flüssigen Ernährungsprodukts, umfassend:
einen formstabilen becherförmigen Behälter (2) mit einem Rand (4), einer kegelstumpfförmigen Seitenwand (6) und einer Basis (8), wobei der Behälter eine Kapazität von weniger als 70 ml und eine Sauerstofftransmission von weniger als 0,0068 ml/ml/Jahr aufweist;
eine Quantität des Ernährungsprodukts innerhalb des Behälters; und
einen mit dem Rand versiegelten Folienverschluss (10);
wobei der Behälter von einem Laminat ausgebildet ist, umfassend eine Sauerstoffbarriereschicht (36) von hoch orientierbarem EVOH mit einem Ethylengehalt von unterhalb 31 mol% zwischen einer inneren Trägerschicht (30) und einer äußeren Trägerschicht (42).

2. Packung nach Anspruch 1, wobei das Laminat des Weiteren eine opake Schicht (32,40) umfasst, vorzugsweise umfassend Graphit.

3. Packung nach Anspruch 1 oder Anspruch 2, wobei die innere Trägerschicht dicker ist als die äußere Trägerschicht.

4. Packung nach einem beliebigen vorhergehenden Anspruch, wobei das Laminat eine Dicke vor dem Formen von zwischen 0,5 mm und 1,7 mm aufweist, vorzugsweise um 1,6 mm.

5. Packung nach einem beliebigen vorhergehenden Anspruch, wobei die Trägerschichten Polypropylen (PP) umfassen.

6. Packung nach einem beliebigen vorhergehenden Anspruch, wobei eine durch die Differenz zwischen dem Volumen des Produkts und dem Volumen des Behälters definierter Kopfraum höchstens 15 ml beträgt.

7. Packung nach einem beliebigen vorhergehenden Anspruch, wobei ein Kopfraum oberhalb des Produkts Sauerstoffarm ist.

8. Packung nach einem beliebigen vorhergehenden Anspruch, wobei die Sauerstoffbarriereschicht eine durchschnittliche Dicke von zwischen 15 Mikrometer und 40 Mikrometer aufweist, zumindest im Bereich der Seitenwand.

9. Packung nach einem beliebigen vorhergehenden Anspruch, wobei die Barriereschicht EVOH mit einer Orientierbarkeitsgrenze im Bereich von mindestens 10 umfasst.

10. Packung nach einem beliebigen vorhergehenden Anspruch, wobei der Rand ein im Wesentlichen zirkulärer Kranz mit einer allgemein flachen oberen Fläche und einer glatten Außenkante zum Trinken ist.

11. Packung nach einem beliebigen vorhergehenden Anspruch, wobei der Behälter aus einem Laminatbogen bei einem Zugverhältnis von mindestens 2 thermogeformt ist.

12. Packung nach einem beliebigen vorhergehenden Anspruch, wobei der Folienverschluss Aluminium umfasst und eine geringere Sauerstoffpermeabilität als das Laminat aufweist.

13. Packung nach einem beliebigen vorhergehenden Anspruch, wobei das Ernährungsprodukt ein fettreiches, energiereiches Getränk ist.

14. Verfahren zum Verpacken einer Einheitsdosierung eines flüssigen Ernährungsprodukts, wobei das Verfahren umfasst:
Bereitstellen eines becherförmigen Behälters (2) mit einer Kapazität von weniger als 70 ml mit einem Rand (4), einer kegelstumpfförmigen Seitenwand (6) und einer Basis (8),
wobei der Behälter eine Sauerstoffpermeabilität von weniger als 0,0068 ml/ml/Jahr aufweist;
wobei der Behälter von einem Laminat ausgebildet ist, umfassend eine Sauerstoffbarriereschicht (36) von hoch orientierbarem EVOH mit einem Ethylengehalt von unterhalb 31 mol% zwischen einer inneren Trägerschicht (30) und einer äußeren Trägerschicht (42);
Einfüllen einer Quantität des Ernährungsprodukts in den Behälter;
Spülen eines Kopfraums oberhalb des Produkts mit einem Inertgas, um Sauerstoff zu entfernen; und
Versiegeln des Behälters durch Auftragen eines Folienverschlusses (10) auf den Rand und zusammen Versiegeln des Rands und des Verschlusses.

15. Verfahren nach Anspruch 14, umfassend das Thermoformen des Behälters aus einem Laminatbogen bei einem Zugverhältnis von mindestens 2.

## Revendications

1. Emballage de dose unitaire (1) d'un produit nutritionnel liquide comprenant :
un récipient en forme de gobelet de forme stable (2) ayant un rebord (4), une paroi latérale tronconique (6) et une base (8), le récipient ayant une capacité inférieure à 70 ml et une transmission d'oxygène inférieur à 0,0068 ml/ml/an ;
une quantité de produit nutritionnel dans le récipient : et
une fermeture en feuille (10) scellée sur le rebord ;
dans lequel le récipient est formé d'un stratifié comprenant une couche de barrière à l'oxygène (36) constituée de EVOH fortement orientable ayant une teneur en éthylène inférieure à 31 mol % entre une couche porteuse intérieure (30) et une couche porteuse extérieure (42).

2. Emballage selon la revendication 1, dans lequel le stratifié comprend de plus une couche opaque (32, 40), comprenant de préférence du graphite.

3. Emballage selon la revendication 1 ou la revendication 2, dans lequel la couche porteuse intérieure est plus épaisse que la couche porteuse extérieure.

4. Emballage selon l'une quelconque des revendications précédentes, dans lequel le stratifié a une épaisseur avant formage comprise entre 0,5 mm et 1,78 mm, de préférence d'environ 1,6 mm.

5. Emballage selon l'une quelconque des revendications précédentes, dans lequel les couches porteuses comprennent du polypropylène (PP).

6. Emballage selon l'une quelconque des revendications précédentes, dans lequel un espace de tête défini par la différence entre le volume du produit et le volume du récipient est au maximum de 15 ml.

7. Emballage selon l'une quelconque des revendications précédentes, dans lequel un espace de tête situé au-dessus du produit est appauvri en oxygène.

8. Emballage selon l'une quelconque des revendications précédentes, dans lequel la couche de barrière à l'oxygène a une épaisseur moyenne comprise entre 15 microns et 40 microns, au moins dans la surface de la paroi latérale.

9. Emballage selon l'une quelconque des revendications précédentes, dans lequel la couche de barrière comprend EVOH ayant une limite d'orientabilité dans une surface d'au moins 10.

10. Emballage selon l'une quelconque des revendications précédentes, dans lequel le rebord est un anneau sensiblement circulaire ayant une surface supérieure généralement plate et un bord extérieur lisse pour boire.

11. Emballage selon l'une quelconque des revendications précédentes, dans lequel le récipient est thermoformé à partir d'une feuille stratifiée au niveau d'un rapport d'étirage d'au moins 2.

12. Emballage selon l'une quelconque des revendications précédentes, dans lequel la fermeture en feuille comprend de l'aluminium et a une perméabilité à l'oxygène inférieure à celle du stratifié.

13. Emballage selon l'une quelconque des revendications précédentes, dans lequel le produit nutritionnel est une boisson à matière grasse élevée, à énergie élevée.

14. Procédé d'emballage d'une dose unitaire d'un produit nutritionnel liquide, le procédé consistant à :
fournir un récipient en forme de gobelet de forme stable (2) ayant une capacité inférieure à 70 ml ayant un rebord (4), une paroi latérale tronconique (6) et une base (8), dans lequel le récipient a une perméabilité à l'oxygène inférieure à 0,0068 ml/ml/an ;
le récipient étant formé d'un stratifié comprenant une couche de barrière à l'oxygène (36) constituée de EVOH fortement orientable ayant une teneur en éthylène inférieure à 31 mol % entre une couche porteuse intérieure (30) et une couche porteuse extérieure (42) ;
remplir une quantité du produit nutritionnel dans le récipient ;
rincer un espace de tête situé au-dessus du produit à l'aide d'un gaz inerte pour enlever l'oxygène ; et
sceller le récipient en appliquant une fermeture en feuille (10) sur le rebord et en scellant ensemble le rebord et la fermeture.

15. Procédé selon la revendication 14, comprenant le thermoformage du récipient à partir d'une feuille stratifiée à un rapport d'étirage d'au moins 2.
